(19) **Europäisches Patentamt European Patent Office Office européen des brevets**

(11) **EP 3 757 880 B1**

(12) **FASCICULE DE BREVET EUROPEEN**

(45) Date de publication et mention de la délivrance du brevet:
**13.11.2024 Bulletin 2024/46**

(51) Classification Internationale des Brevets (IPC):
***G06V 30/18*** (2022.01)     ***G06V 30/186*** (2022.01)
***G06V 30/19*** (2022.01)

(21) Numéro de dépôt: **20182084.2**

(22) Date de dépôt: **24.06.2020**

(52) Classification Coopérative des Brevets (CPC):
**G06V 30/19067; G06V 30/1801; G06V 30/186; G06V 30/19093**

(54) **PROCÉDÉ ET DISPOSITIF ÉLECTRONIQUE DE VÉRIFICATION D'UN CARACTÈRE À AFFICHER SUR UN ÉCRAN PAR RAPPORT À UN CARACTÈRE DE RÉFÉRENCE, PRODUIT PROGRAMME D'ORDINATEUR, ET PROCESSEUR GRAPHIQUE ASSOCIÉ**

VERFAHREN UND ELEKTRONISCHE VORRICHTUNG ZUR ÜBERPRÜFUNG EINES AUF EINEM BILDSCHIRM ANZUZEIGENDEN ZEICHENS IM VERGLEICH ZU EINEM REFERENZZEICHEN, COMPUTERPROGRAMMPRODUKT UND ENTSPRECHENDER GRAFISCHER PROZESSOR

ELECTRONIC METHOD AND DEVICE FOR VERIFYING A CHARACTER TO BE DISPLAYED ON A SCREEN RELATIVE TO A REFERENCE CHARACTER, COMPUTER PROGRAM PRODUCT AND ASSOCIATED GRAPHIC PROCESSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.06.2019 FR 1906865**

(43) Date de publication de la demande:
**30.12.2020 Bulletin 2020/53**

(73) Titulaire: **THALES**
**92400 Courbevoie (FR)**

(72) Inventeurs:
- **FINE, Alexandre**
 **33700 MERIGNAC (FR)**
- **NETO, Philippe**
 **33700 MERIGNAC (FR)**
- **ROUZES, Siegfried**
 **33700 MERIGNAC (FR)**

(74) Mandataire: **Lavoix**
**2, place d'Estienne d'Orves**
**75441 Paris Cedex 09 (FR)**

(56) Documents cités:
 **JP-A- 2016 076 093     US-A1- 2002 105 515**

**Description**

La présente invention concerne un procédé et un dispositif électronique de vérification d'un caractère à afficher sur un écran, par rapport à un caractère de référence.

L'invention concerne également un produit programme d'ordinateur comprenant des instructions logicielles qui, lorsqu'elles sont exécutées par un ordinateur, mettent en oeuvre un tel procédé de vérification.

L'invention concerne également un processeur graphique comprenant un tel dispositif électronique de vérification.

L'invention concerne le domaine des systèmes d'affichage de données, de préférence destinés à être embarqués à bord d'un aéronef, notamment dans un cockpit d'aéronef.

L'invention concerne en particulier le domaine des processeurs graphiques inclus dans ces systèmes d'affichage, ces processeurs graphiques étant également généralement appelés GPU (de l'anglais *Graphie Processing Unit*). De tels processeurs graphiques sont typiquement réalisés sous forme d'un ou plusieurs circuits intégrés dédiés, tels qu'un ou plusieurs ASIC (de l'anglais *Application Spécifie Integrated Circuit*).

US 2002/105515 A1 décrit un procédé de génération de caractères en trois dimensions à partir de caractères en deux dimensions.

JP 2016 076093 A décrit un procédé de reconnaissance d'un caractère.

On connaît alors un processeur graphique du type précité permettant d'afficher notamment des caractères sur un écran de monitoring d'un aéronef afin d'aider au pilotage de l'aéronef.

Toutefois, en cas d'erreur du processeur graphique, les caractères peuvent être mal affichés sur l'écran. Le processeur graphique peut aussi afficher un mauvais caractère.

Le but de l'invention est alors de proposer un procédé et un dispositif électronique de vérification permettant de vérifier de façon précise un caractère à afficher sur un écran.

A cet effet, l'invention a pour objet un procédé de vérification selon la revendication 1.

Un tel procédé de vérification permet de vérifier qu'un caractère à afficher sur un écran est correct par rapport à un caractère de référence, quelle que soit la position, la taille et l'orientation du caractère à afficher sur l'écran. En effet, l'utilisation du barycentre de chaque caractère comme centre d'un repère permet d'obtenir des coordonnées géométriques des points caractéristiques comparables les unes par rapport aux autres, et le calcul de l'écart entre le caractère à afficher et le caractère de référence permet vérifier si les points caractéristiques du caractère à afficher sont positionnés correctement, ce qui permet de s'assurer que son affichage est correct, si l'écart calculé est inférieur au seuil prédéterminé, quelle que soit sa position, sa taille et son orientation.

Suivant d'autres aspects avantageux, le procédé de vérification est selon l'une des revendications 2 à 6.

L'invention a également pour objet un produit programme d'ordinateur selon la revendication 7.

L'invention a également pour objet un dispositif électronique de vérification selon la revendication 8.

L'invention a également pour objet un processeur graphique selon la revendication 9.

Ces caractéristiques et avantages de l'invention apparaîtront à la lecture de la description qui va suivre, donnée uniquement à titre d'exemple non limitatif, et faite en référence aux dessins annexés sur lesquels :

- la figure 1 est une représentation schématique d'un processeur graphique comprenant un dispositif de vérification selon l'invention,
- la figure 2 est une représentation schématique d'un écran sur lequel sont représentés un caractère à afficher et un caractère de référence, et
- la figure 3 est un organigramme d'un procédé de vérification selon l'invention.

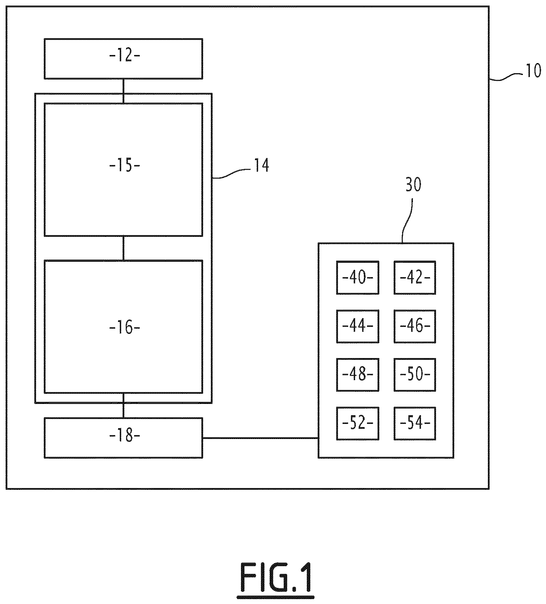

La figure 1 représente un processeur graphique 10, aussi appelé GPU (de l'anglais *Graphics Processing Unit*), comprenant un module 12 d'acquisition de commande d'affichage d'un caractère, un module 14 de traitement d'un affichage d'un caractère à partir d'une commande acquise, le module de traitement 14 comportant un moteur géométrique 15 et une unité de rastérisation 16. Le processeur graphique 10 comprend une mémoire tampon 18 connectée au module de traitement 14.

Le processeur graphique 10 est, par exemple, destiné à être intégré dans un système d'affichage, de préférence, destiné à être embarqué à bord d'un aéronef, notamment dans un cockpit d'aéronef.

Le processeur graphique 10 est configuré pour générer des données pour un affichage sur un écran 20. Ces données sont, par exemple, des données pour l'affichage de caractère(s) tel(s) que des caractères alphanumériques.

Le processeur graphique 10 est alors configuré pour générer des données pour l'affichage d'un caractère à une position souhaitée sur l'écran 20, et avec une orientation et une taille souhaitée. En variante, il est configuré pour générer des données pour l'affichage d'un caractère à une position souhaitée et avec une orientation souhaitée sur l'écran 20, et avec une taille prédéfinie. En variante encore, il est configuré pour générer des données pour l'affichage d'un caractère à une position souhaitée et avec une orientation et une taille définies sur l'écran 20.

Chaque caractère comprend au moins un segment à afficher sur l'écran 20. De tels caractères sont alors appelés caractères vectoriels.

En outre, chaque caractère comprend plusieurs points caractéristiques à afficher sur l'écran. Les points caractéristiques dudit caractère correspondent aux extrémités du ou des segments dudit caractère. Avantageusement, chaque caractère comprend, pour chaque extrémité de ses segments non confondue avec une autre extrémité de ses segments, un point caractéristique correspondant à ladite extrémité ; et pour chaque extrémité de ses segments confondue avec une autre extrémité de ses segments, un unique point caractéristique pour lesdites deux extrémités confondues.

L'écran 20 est, par exemple, un écran de monitoring destiné à être embarqué à bord d'un aéronef, notamment dans un cockpit d'aéronef, comme connu en soi.

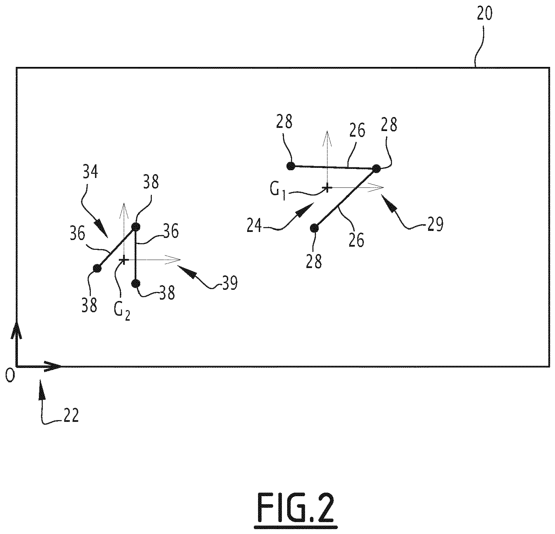

La figure 2 est une représentation schématique de l'écran 20 avec un repère absolu 22, et sur lequel est représenté un caractère à afficher 24 comprenant des segments 26 et des points caractéristiques 28.

A titre d'exemple, le caractère à afficher 24 est un caractère quelconque comprenant deux segments 26 et trois points caractéristiques 28.

Dans l'exemple de la figure 2, l'écran est de forme rectangulaire et le repère absolu 22 est un repère orthonormé d'origine O correspondant à un sommet de l'écran 20.

On appelle coordonnées absolues d'un pixel, les coordonnées cartésiennes dudit pixel prises dans le repère absolu 22.

L'écran 20 est, par exemple, configuré pour afficher des caractères, à partir de données générées par le processeur graphique 10 comprenant des coordonnées absolues de pixels de l'écran 20 à afficher.

Dans l'exemple de la figure 1, le processeur graphique est réalisé sous forme de composants logiques programmables, tel qu'un ou plusieurs FPGA (de l'anglais Field-Programmable Gate Array), ou encore sous forme de circuits intégrés dédiés, de type ASIC (de l'anglais Application-Specific Integrated Circuit).

Le module d'acquisition 12 est configuré pour acquérir des commandes d'affichage du caractère à afficher 24, notamment issues d'un processeur ou CPU (de l'anglais *Central Processing Unit*).

Le module de traitement 14 est connecté au module d'acquisition 12 et est configuré pour fournir des données géométriques du caractère à afficher 24, à partir de commandes d'affichage acquises. Par exemple, les données géométriques du caractère à afficher 24 comprennent les coordonnées absolues de pixels à afficher sur l'écran 20 du ou de chaque segment 26 du caractère à afficher 24.

Le moteur géométrique 15, aussi appelé GE (de l'anglais *Géométrie Engine*), est configuré pour fournir des données géométriques du ou des segments 26 du caractère à afficher 24, à partir de la commande d'affichage acquise.

Les données géométriques d'un segment 26 du caractère à afficher 24 comprennent, par exemple, les coordonnées absolues des points caractéristiques 28 du caractère à afficher 24 correspondant aux extrémités dudit segment 26.

L'unité de rastérisation 16, ou RE (de l'anglais *Raster Engine*), est connectée au moteur géométrique 15, et est configurée pour fournir les données géométriques du caractère à afficher 24 sur l'écran 20, en particulier les coordonnées absolues des pixels à afficher du ou de chaque segment 26 dudit caractère 24, à partir des données géométriques du ou des segments 26 du caractère à afficher 24 fournies par le moteur géométrique 15.

La mémoire tampon 18 est configurée pour stocker les données du caractère à afficher 24 fournies par le module de traitement 14, ces données stockées étant ensuite utilisées pour l'affichage du caractère à afficher 24 sur l'écran 20.

Le processeur graphique 10 comprend, en outre, un dispositif électronique 30 de vérification d'un caractère à afficher 24 sur l'écran 20 par rapport à un caractère de référence 34, le dispositif de vérification 30 étant connecté à la mémoire tampon 18.

Le dispositif de vérification 30 est configuré pour vérifier que le caractère à afficher 24 est correct par rapport au caractère de référence 34, c'est-à-dire que le caractère à afficher 24 est l'image d'une transformation géométrique du caractère de référence 34, et donc que les segments 26 et points caractéristiques 28 sont les images par ladite transformation géométrique de segments 36 et points caractéristiques 38 du caractère de référence 34. A titre d'exemple, le caractère de référence 34 est représenté sur la figure 2 avec deux segments 36 et trois points caractéristiques 38.

Dans la suite et à titre d'exemple, la transformation géométrique est une transformation ou une combinaison de transformations parmi le groupe constitué d'une translation, d'une rotation et d'une homothétie. La transformation géométrique est alors une similitude directe.

Dans l'exemple de la figure 2, la transformation géométrique comprend une translation, une rotation et une homothétie.

Le dispositif de vérification 30 comporte une première unité 40 de détermination d'un barycentre G1 des points caractéristiques 28 du caractère à afficher 24, une première unité 42 de calcul de coordonnées géométriques de chaque point caractéristique 28 du caractère à afficher 24 dans un repère 29 centré sur le barycentre G1 déterminé, et une deuxième unité 44 de calcul d'un écart E entre le caractère à afficher 24 et le caractère de référence 34.

**EP 3 757 880 B1**

En complément facultatif, le dispositif de vérification 30 comprend, en outre, une unité 46 de comparaison du nombre de points caractéristiques 28 du caractère à afficher 24 et de celui du caractère de référence 34.

En complément facultatif encore, le dispositif de vérification 30 comprend, en outre, une troisième unité 48 de calcul d'une transformation géométrique entre un caractère parmi le caractère à afficher 24 et le caractère de référence 34, et l'autre caractère parmi le caractère à afficher 24 et le caractère de référence 34, et une deuxième unité 50 de détermination d'une position à l'écran 20 du caractère à afficher 24, une troisième unité 52 de détermination d'une orientation à l'écran 20 du caractère à afficher 24, et en complément, une quatrième unité 54 de détermination d'une taille à l'écran 20 du caractère à afficher 24.

La première unité de détermination 40 est configurée pour déterminer le barycentre G1 des points caractéristiques 28 du caractère à afficher 24, en particulier les coordonnées absolues $(x_{G1}, y_{G1})$ du barycentre G1, à partir des données géométriques de caractères à afficher stockées dans la mémoire tampon 18, en particulier à partir des coordonnées absolues $(x_i^{(a)}, y_i^{(a)})$ des pixels correspondant aux points caractéristiques 28, avec i allant de 1 à $N_1$, $N_1$ étant le nombre de points caractéristiques 28 du caractère à afficher 24.

La première unité de détermination 40 est, par exemple, configurée pour calculer les coordonnées absolues $(x_{G1}, y_{G1})$ du barycentre G1 suivant les équations suivantes :

$$[\text{Math 1}] \quad x_{G1} = \sum_{1 \le i \le N_1} \frac{x_i^{(a)}}{N_1} \; ;$$

et

$$[\text{Math 2}] \quad y_{G1} = \sum_{1 \le i \le N_1} \frac{y_i^{(a)}}{N_1}$$

La première unité de calcul 42 est configurée pour calculer les coordonnées géométriques $(x_i, y_i)$ de chaque point caractéristique 28 du caractère de référence 34 dans le repère 29, de préférence orthonormé, centré sur le barycentre G1 déterminé.

Les coordonnées géométriques $(x_i, y_i)$ des points caractéristiques 28 vérifient alors les équations suivantes :

$$[\text{Math 3}] \quad x_i = x_i^{(a)} - x_{G1} \; ;$$

et

$$[\text{Math 4}] \quad y_i = y_i^{(a)} - y_{G1} \; .$$

La deuxième unité de calcul 44 est configurée pour calculer l'écart E entre le caractère à afficher 24 et le caractère de référence 34, en fonction des coordonnées géométriques $(x_i, y_i)$ calculées pour le caractère à afficher 24 et de coordonnées géométriques $(X_i, Y_i)$ prédéterminées pour le caractère de référence 34. Les coordonnées géométriques $(X_i, Y_i)$ prédéterminées sont des coordonnées géométriques des points caractéristiques 38 du caractère de référence 34 dans un repère 39, de préférence orthonormé, centré sur un barycentre G2 de ses points caractéristiques 38, avec i allant de 1 à $N_2$, $N_2$ étant le nombre de points caractéristiques 38 du caractère de référence 34.

Par exemple, la deuxième unité de calcul 44 est configurée pour l'écart E en fonction d'une erreur quadratique $E_q$ entre les coordonnées géométriques $(x_i, y_i)$ des points caractéristiques 28 du caractère à afficher 24 et celles des points caractéristiques 38 du caractère de référence 34, l'écart E étant de préférence égal à ladite erreur quadratique $E_q$.

De préférence, la deuxième unité de calcul 44 est configurée pour calculer l'erreur quadratique $E_q$ en fonction de la transformation géométrique entre le caractère à afficher 24 et le caractère de référence 34, en supposant le nombre $N_1$ de points caractéristiques 28 du caractère à afficher 24 égal à celui $N_2$ du caractère de référence 34, $N = N_1 = N_2$ représentant alors ledit nombre de points caractéristiques 28, 38, selon les équations suivantes :

$$[\text{Math 5}] \quad E_q = \sqrt{\frac{S_2 + s_2 - 2\sigma}{N}} \; ,$$

si la transformation géométrique est une translation ;

$$[\text{Math 6}] \quad E_q = \sqrt{\frac{S_2 + s_2 - 2\rho}{N}}$$

si la transformation géométrique est une rotation, ou une combinaison d'une translation et une rotation;

$$[\text{Math 7}] \quad E_q = \sqrt{\frac{S_2 - \rho/\lambda}{N}} \ ,$$

, si la transformation géométrique est une homothétie, ou une combinaison d'une homothétie, et d'une translation et/ou d'une rotation;

avec

$$[\text{Math 8}] \quad S_2 = \sum_{1 \le i \le N}(X_i^2 + Y_i^2) \ ;$$

$$[\text{Math 9}] \quad s_2 = \sum_{1 \le i \le N}(x_i^2 + y_i^2) \ ;$$

$$[\text{Math 10}] \quad \sigma = \sum_{1 \le i \le N}(x_i X_i + y_i Y_i) \ ;$$

$$[\text{Math 11}] \quad \rho = \sqrt{\sigma^2 + \kappa^2} \ ;$$

$$[\text{Math 12}] \quad \kappa = \sum_{1 \le i \le N}(y_i X_i + x_i Y_i) \ ;$$

et

$$[\text{Math 13}] \quad \lambda = s_2/\rho.$$

Le caractère à afficher 24 est considéré correct si l'écart calculé E est inférieur à un seuil S prédéterminé.

Avantageusement, le seuil S est déterminé, par exemple via des essais préliminaires, de manière à ce que lorsque l'écart calculé E est inférieur audit seuil S, chaque point caractéristique 28 du caractère à afficher 24 est distant, d'un maximum de deux pixels suivant un axe des abscisses du repère absolu 22 et de deux pixels suivant un axe des ordonnées du repère absolu 22, de l'image par la transformation géométrique d'un point caractéristique 38 correspondant du caractère de référence 34.

Par exemple, les premières unités de détermination 40 et, respectivement, de calcul 42 sont, en outre, configurées pour déterminer le barycentre G2 des points caractéristiques 38 pour un ensemble de caractères de référence 34 aptes à être affiché à l'écran 20, en particulier les coordonnées absolues $(X_{G2}, Y_{G2})$ du barycentre G2, et respectivement pour calculer les coordonnées géométriques $(X_i, Y_i)$ de chaque point caractéristique 38 pour l'ensemble des caractères de référence 34 aptes être affiché à l'écran 20, dans le repère 39, de préférence au démarrage du processeur graphique 10.

En complément facultatif, l'unité de comparaison 46 est configurée pour comparer, préalablement à la détermination du barycentre G1, le nombre $N_1$ de points caractéristiques 28 du caractère à afficher 24 et le nombre $N_2$ de points caractéristiques 38 du caractère de référence 34.

En complément facultatif encore, la troisième unité de calcul 48 est configurée pour calculer, après le calcul des coordonnées géométriques $(x_i, y_i)$ des points caractéristiques 28 du caractère à afficher 24, la transformation géométrique entre un caractère parmi le caractère à afficher 24 et le caractère de référence 34, et l'autre caractère parmi le caractère à afficher 24 et le caractère de référence 34.

En particulier, la troisième unité de calcul 48 est configurée pour déterminer un vecteur de translation entre le caractère à afficher 24 et le caractère de référence 34. Le vecteur de translation déterminé correspond à un vecteur entre le barycentre G1 du caractère à afficher 24 et le barycentre G2 du caractère de référence 34.

En complément, la troisième unité de calcul 48 est configurée pour calculer un angle de rotation θ entre le caractère à afficher 24 et le caractère de référence 34, suivant les équations suivantes :

$$[\text{Math 14}] \cos\theta = \frac{\sigma}{\rho} \; ;$$

et

$$[\text{Math 15}] \sin\theta = \frac{\kappa}{\rho} \; ;$$

où $\sigma$ est défini selon [Math 10], $\rho$ selon [Math 11] et $\kappa$ selon [Math 12].

En complément encore, la troisième unité de calcul 48 est configurée pour calculer un facteur d'homothétie $\lambda$ entre le caractère à afficher 24 et le caractère de référence 34, suivant l'équation [Math 13].

La deuxième unité de détermination 50 est configurée pour déterminer la position du caractère de référence 24, en fonction de la transformation géométrique calculée, en particulier en fonction du vecteur de translation déterminé, et en fonction d'une position prédéterminée du caractère de référence 34.

La troisième unité de détermination 52 est configurée pour déterminer l'orientation du caractère de référence 24, en fonction de la transformation géométrique calculée, en particulier en fonction de l'angle de rotation $\theta$ calculé, et en fonction d'une orientation prédéterminée du caractère de référence 34.

La quatrième unité de détermination 54 est configurée pour déterminer la taille du caractère de référence 24, en fonction de la transformation géométrique calculée, en particulier en fonction du facteur d'homothétie $\lambda$ calculé, et en fonction d'une taille prédéterminée du caractère de référence 34.

En variante non représentée, le dispositif de vérification 30 est un dispositif externe au processeur graphique 10. Selon cette variante, le processeur graphique 10 comprend un module d'émission de données géométriques du caractère à afficher 24 à destination du dispositif de vérification 30, et un module de réception de données de vérification de la part du dispositif de vérification 30. Selon cette variante, le dispositif de vérification 30 est tel que défini ci-dessus, et comprend en outre, une unité de réception des données géométriques du caractère à afficher 24 de la part du processeur graphique 10, et une unité d'émission des données de vérification à destination du processeur graphique 10.

Les données de vérification comprennent des données indiquant si le caractère à afficher est correct ou non, et en complément facultatif des données comprenant la position, l'orientation et, en complément encore, la taille du caractère à afficher 24.

Le dispositif de vérification 30 est, par exemple, réalisé sous forme de composants logiques programmables, tel qu'un ou plusieurs FPGA (de l'anglais Field-Programmable Gate Array), ou encore sous forme de circuits intégrés dédiés, de type ASIC.

En variante non représentée, le dispositif de vérification 30 comprend une unité de traitement d'informations, comportant une mémoire, et un processeur associé à la mémoire. La première unité de détermination 40, les première et deuxième unités de calcul 42 et 44, ainsi qu'en complément facultatif, l'unité de comparaison 46, la troisième unité de calcul 48 et les deuxième, troisième et quatrième unités de détermination 50, 52 et 54, ainsi que les unités de réception et d'émission, sont alors réalisées chacun sous forme d'un logiciel, ou d'une brique logicielle, exécutables par le processeur. La mémoire est alors apte à stocker un premier logiciel de détermination du barycentre G1 des points caractéristiques 28 du caractère à afficher 24, un premier logiciel de calcul des coordonnées géométriques $(x_i, y_i)$ de chaque point caractéristique 28 du caractère à afficher 24, un deuxième logiciel de calcul de l'écart E entre le caractère à afficher 24 et le caractère de référence 34, et en complément facultatif un logiciel de comparaison du nombre $N_1$ de points caractéristiques 28 du caractère à afficher 24 et du nombre $N_2$ de points caractéristiques 38 du caractère de référence 34, un troisième logiciel de calcul de la transformation géométrique entre un caractère parmi le caractère à afficher 24 et le caractère de référence 34, et l'autre caractère parmi le caractère à afficher 24 et le caractère de référence 34, un deuxième logiciel de détermination de la position du caractère à afficher 24, un troisième logiciel de détermination de l'orientation du caractère à afficher 24, et un quatrième logiciel de détermination de la taille du caractère à afficher 24, ainsi qu'un logiciel de réception de données géométriques du caractère à afficher 24 de la part du processeur graphique 10 et un logiciel d'émission de données de vérification à destination du processeur graphique 10.

Lorsque le dispositif de vérification 30 est réalisé sous forme d'un ou plusieurs logiciels, c'est-à-dire sous forme d'un produit programme d'ordinateur, il est en outre apte à être enregistré sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, NVRAM), une carte magnétique ou une carte optique. Sur le support lisible est alors mémorisé un produit programme d'ordinateur comprenant des instructions logicielles.

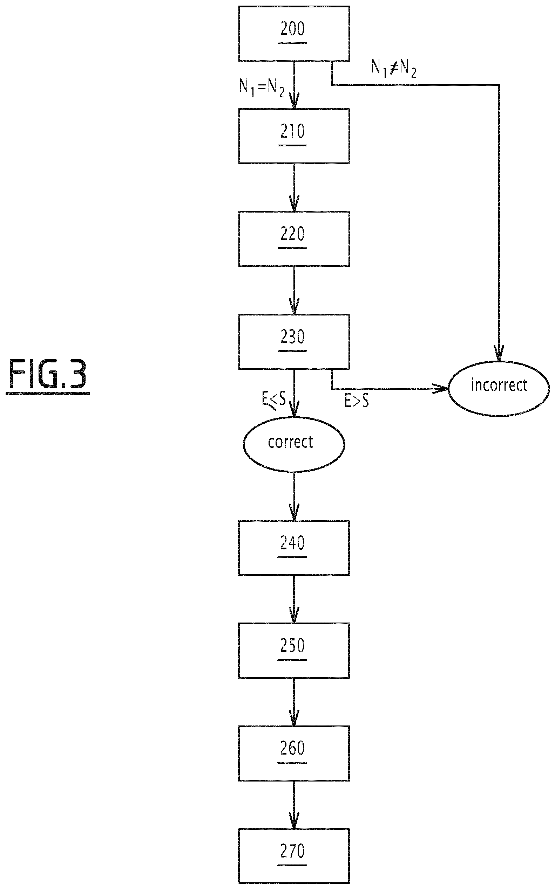

Un procédé de vérification du caractère à afficher 24 sur l'écran 20 par rapport au caractère de référence 34, mis en oeuvre par le dispositif de vérification 30, va maintenant être décrit, en regard de la figure 3.

Le procédé comprend une étape 210 de détermination, par la première unité de détermination 40, du barycentre G1 des points caractéristiques 28 du caractère à afficher 24. Lors de cette étape 210, la première unité de détermination 40 calcule les coordonnées absolues ($x_{G1}$, $y_{G1}$) du barycentre G1, à partir des coordonnées absolues ($x_i^{(a)}$, $y_i^{(a)}$) des points caractéristiques 28 du caractère de référence 34, par exemple, suivant les équations [Math 1] et [Math 2].

Le procédé comprend ensuite une étape 220 de calcul, par la première unité de calcul 42, des coordonnées géométriques ($x_i$, $y_i$) de chaque point caractéristique 28 du caractère à afficher 24. Lors de cette étape 210, la première unité de calcul 42 calcule les coordonnées géométriques ($x_i$, $y_i$) de chaque point caractéristique 28, suivant les équations [Math 3] et [Math 4].

Enfin, le procédé comprend une étape 230 de calcul, par la deuxième unité de calcul 44, de l'écart E entre le caractère à afficher 24 et le caractère de référence 34.

Pendant l'étape de calcul 230, la deuxième unité de calcul 44 calcule l'écart E, de préférence en fonction de l'erreur quadratique $E_q$, par exemple suivant l'équation [Math 7].

En variante, lorsque le processeur graphique 10 est configuré pour afficher un caractère avec une taille prédéfinie, la deuxième unité de calcul 44 calcule l'écart E en fonction de l'erreur quadratique $E_q$, suivant l'équation [Math 6].

En variante encore, lorsque le processeur graphique 10 est configuré pour afficher un caractère avec une orientation et une taille prédéfinies, la deuxième unité de calcul 44 calcule l'écart E en fonction de l'erreur quadratique $E_q$, suivant l'équation [Math 5].

Le caractère à afficher 24 est considéré correct seulement si l'écart E calculé est inférieur au seuil S prédéterminé.

En complément facultatif, le procédé comprend, préalablement à l'étape de détermination 210, une étape 200 de comparaison, par l'unité de comparaison 46, du nombre $N_1$ de points caractéristiques 28 du caractère à afficher 24 et du nombre $N_2$ de points caractéristiques 38 du caractère de référence 34.

L'étape suivante de détermination 210 est effectuée ensuite, seulement si le nombre $N_1$ de points caractéristiques 28 du caractère à afficher 24 et celui $N_2$ du caractère de référence 34 sont égaux.

Le caractère à afficher 24 est considéré incorrect et les étapes suivantes ne sont pas effectuées, si le nombre $N_1$ de points caractéristiques 28 du caractère à afficher 24 diffère du nombre $N_2$ de points caractéristiques 38 du caractère de référence 34.

En complément facultatif encore, le procédé comprend, suivant l'étape de calcul 220, une étape 240 de calcul, par la troisième unité de calcul 48, de la transformation géométrique entre un caractère parmi le caractère à afficher 24 et le caractère de référence 34, et l'autre caractère parmi le caractère à afficher 24 et le caractère de référence 34.

Lors de l'étape 240, la troisième unité de calcul 48 calcule, par exemple, le vecteur de translation en fonction du barycentre G1 calculé, l'angle de la rotation θ suivant les équations [Math 14] et [Math 15] et le facteur d'homothétie λ de la transformation géométrique suivant l'équation [Math 13].

En variante, lorsque le processeur graphique 10 est configuré pour afficher un caractère avec une taille prédéfinie, la troisième unité de calcul 48 calcule uniquement le vecteur de translation et l'angle de rotation θ.

En variante encore, lorsque le processeur graphique 10 est configuré pour afficher un caractère avec une orientation et une taille prédéfinies, calcule uniquement le vecteur de translation.

Le procédé comprend alors une étape 250 de détermination, par la deuxième unité de détermination 50, de la position à l'écran 20 du caractère à afficher 24, en fonction de la transformation géométrique calculée, en particulier du vecteur de translation calculé, et en fonction de la position prédéterminée du caractère de référence 34.

Le procédé comprend, en outre une étape 260 de détermination, par la troisième unité de détermination 52 de l'orientation à l'écran 20 du caractère à afficher 24, en fonction de la transformation géométrique calculée, en particulier de l'angle de la rotation θ calculé, et en fonction de l'orientation prédéterminée du caractère de référence 34

De préférence, le procédé comprend, en outre, suivant l'étape de détermination 240, une étape 270 de calcul, par la quatrième unité de détermination 54, de la taille à l'écran 20 du caractère à afficher 24, en particulier du facteur d'homothétie λ calculé, et en fonction de la taille prédéterminée du caractère de référence 34.

Dans l'exemple de la figure 3, l'étape 260 est effectuée à la suite de l'étape 250 et l'étape 270 est effectuée à la suite de l'étape 260. En variante non représentée, les étapes 250 à 270 sont effectuées dans n'importe quel ordre.

En variante, lorsque le processeur graphique 10 est configuré pour afficher un caractère avec une taille prédéfinie, l'étape 270 n'est pas effectuée.

En variante encore, lorsque le processeur graphique 10 est configuré pour afficher un caractère avec une orientation et une taille prédéfinies, les étapes 260 et 270 ne sont pas effectuées.

Dans l'exemple de la figure 3, les étapes 240 à 270 sont effectuées seulement après que le caractère à afficher 24 a été considéré correct à l'issue de l'étape 230.

Alternativement, les étapes 240 à 270 sont effectuées entre les étapes 220 et 230.

Selon cette alternative, lors de l'étape de calcul 230, la deuxième unité de calcul 44 calcule l'écart E en fonction de la transformation géométrique calculée. Plus particulièrement, la deuxième unité de calcul 44 calcule l'écart E en fonction l'erreur quadratique $E_q$, suivant :

- l'équation [Math 7], si le facteur d'homothétie λ calculé est différent de 1, i.e. si la transformation géométrique calculée comprend une homothétie.
- l'équation [Math 6], si le facteur d'homothétie λ calculé est égal à 1 et l'angle de la rotation θ calculé est différent de 0°, i.e. si la transformation géométrique calculée comprend uniquement une translation et une rotation, ou uniquement une rotation, et
- l'équation [Math 5], si le facteur d'homothétie λ calculé est égal à 1 et l'angle de la rotation θ calculé est égal à 0°, i.e. si la transformation géométrique calculée comprend uniquement une translation.

En variante, lorsque le dispositif de vérification 30 est un dispositif externe au processeur graphique 10, le procédé comprend, en outre, une étape préliminaire, non représentée, de réception, de la part du processeur graphique 10, de données géométriques du caractère à afficher 24, et une étape finale, non représentée, d'émission des données de vérification à destination du processeur graphique 10.

Ainsi, le dispositif de vérification 30 selon l'invention permet de vérifier le caractère à afficher 24 par rapport au caractère de référence 34 juste avant son affichage sur l'écran 20, ce qui permet de garantir un affichage correct de ce caractère, quelle que soit sa position, sa taille et son orientation.

En outre, le calcul de la position, de l'orientation et de la taille du caractère à afficher 24 permet de vérifier que le caractère est affiché à une position souhaitée à l'écran 20, et avec une orientation et une taille souhaitées.

Un tel dispositif de vérification 30 permet alors de vérifier le caractère à afficher 24 avec un nombre limité de calculs, ce qui permet au dispositif de vérification 30 de vérifier un nombre important de caractères au cours d'une brève période temporelle, par exemple inférieur à 250 microsecondes pour 1000 caractères lorsque le dispositif de vérification 30 est un dispositif externe au processeur graphique 10.

De plus, le calcul de l'écart E est optimisé en fonction de la transformation géométrique entre le caractère à afficher 24 et le caractère de référence 34.

## Revendications

1. Procédé de vérification d'un caractère à afficher (24) sur un écran (20), par rapport à un caractère de référence (34),

   le caractère à afficher (24) et le caractère de référence (34) comprenant chacun au moins plusieurs points caractéristiques (28, 38) à afficher sur l'écran (20),
   le procédé étant **caractérisé en ce qu'**il comprend les étapes suivantes :

   a) la détermination (210) d'un barycentre (G1) des points caractéristiques (28) du caractère à afficher (24),
   b) le calcul (220) de coordonnées géométriques de chaque point caractéristique (28) du caractère à afficher (24) dans un repère (29) centré sur le barycentre (G1) déterminé, et
   c) le calcul (230) d'un écart (E) entre le caractère à afficher (24) et le caractère de référence (34), en fonction des coordonnées géométriques calculées pour le caractère à afficher (24) et de coordonnées géométriques prédéterminées pour le caractère de référence (34), lesdites coordonnées géométriques prédéterminées étant des coordonnées géométriques des points caractéristiques (38) du caractère de référence (34) dans un repère (39) centré sur un barycentre (G2) de ses points caractéristiques (38),

   le caractère à afficher (24) étant considéré correct seulement si l'écart (E) calculé est inférieur à un seuil (S) prédéterminé,
   dans lequel le caractère à afficher (24) et le caractère de référence (34) comprennent chacun au moins un segment (26, 36) à afficher sur l'écran (20), les points caractéristiques (28, 38) dudit caractère correspondant à des extrémités de l'au moins un segment (26, 36).

2. Procédé selon la revendication 1, dans lequel le procédé comprend, en outre, les étapes suivantes, après l'étape b) :

   d) le calcul (240) d'une transformation géométrique entre un caractère parmi le caractère à afficher (24) et le caractère de référence (34), et l'autre caractère parmi le caractère à afficher (24) et le caractère de référence (34),
   e) la détermination (250) d'une position à l'écran (20) du caractère à afficher (24), en fonction de la transformation géométrique calculée et d'une position du caractère de référence (34) prédéterminée, et
   f) la détermination (260) d'une orientation à l'écran (20) du caractère à afficher (24), en fonction de la transformation géométrique calculée et d'une orientation du caractère de référence (34) prédéterminée.

3. Procédé selon la revendication 2, dans lequel le procédé comprend, en outre, après l'étape d), une étape de détermination (270) d'une taille à l'écran (20) du caractère à afficher (24), en fonction de la transformation géométrique calculée et d'une taille du caractère de référence (34) prédéterminée.

4. Procédé selon l'une quelconque des revendications précédentes, dans lequel le procédé comprend préalablement à l'étape a), une étape de comparaison (200) du nombre de points caractéristiques (28) du caractère à afficher (24) et de celui du caractère de référence (34), le caractère à afficher (24) étant considéré incorrect et les étapes suivantes n'étant pas effectuées, si le nombre de points caractéristiques (28) du caractère à afficher (24) diffère de celui du caractère de référence (34).

5. Procédé selon l'une quelconque des revendications précédentes, dans lequel, lors de l'étape c), l'écart (E) entre le caractère à afficher (24) et le caractère de référence (34) est calculé en fonction d'une erreur quadratique entre les coordonnées géométriques des points caractéristiques (28) du caractère à afficher (24) et celles des points caractéristiques (38) du caractère de référence (34).

6. Procédé selon la revendication 5, dans lequel le caractère à afficher (24) est l'image d'une transformation géométrique du caractère de référence (34), la transformation géométrique étant une similitude directe, le nombre de points caractéristiques (28) du caractère à afficher (24) et le nombre de points caractéristiques (38) du caractère de référence (34) sont égaux, et l'erreur quadratique vérifie l'une des équations suivantes :

- $E_q = \sqrt{\dfrac{S_2 + s_2 - 2\sigma}{N}}$ si la transformation géométrique est une translation,

- $E_q = \sqrt{\dfrac{S_2 + s_2 - 2\rho}{N}}$ si la transformation géométrique est une rotation, ou une combinaison d'une translation et d'une rotation, et

- $E_q = \sqrt{\dfrac{S_2 - \rho/\lambda}{N}}$ si la transformation géométrique est une homothétie, ou une combinaison d'une homothétie, et d'une translation et/ou d'une rotation,

avec $S_2 = \sum_{1 \le i \le N}(X_i^2 + Y_i^2)$ ; $s_2 = \sum_{1 \le i \le N}(x_i^2 + y_i^2)$ ; $\sigma = \sum_{1 \le i \le N}(x_i X_i + y_i Y_i)$ ; $\rho = \sqrt{\sigma^2 + \kappa^2}$ ; $\kappa = \sum_{1 \le i \le N}(y_i X_i + x_i Y_i)$ ; et $\lambda = s_2/\rho$,

N représentant le nombre de points caractéristiques (28, 38) de chaque caractère (24, 34), $x_i$ et $y_i$ étant les coordonnées géométriques d'un $i^{ème}$ point caractéristique parmi les points caractéristiques (28) du caractère à afficher (24), et $X_i$ et $Y_i$ étant les coordonnées géométriques d'un $i^{ème}$ point caractéristique parmi les points caractéristiques (38) du caractère de référence (34).

7. Produit programme d'ordinateur comprenant des instructions logicielles qui, lorsqu'elles sont exécutées par un ordinateur, mettent en oeuvre un procédé selon l'une quelconque des revendications précédentes.

8. Dispositif électronique de vérification (30) d'un caractère à afficher (24) sur un écran (20) par rapport à un caractère de référence (34),

le caractère à afficher (24) et le caractère de référence (34) comprenant chacun plusieurs points caractéristiques (28, 38) à afficher sur l'écran (20),
le dispositif de vérification (30) étant **caractérisé en ce qu'**il comprend :

- une unité de détermination (40) d'un barycentre (G1) des points caractéristiques (28) du caractère à afficher (24),
- une première unité de calcul (42) de coordonnées géométriques de chaque point caractéristique (28) du caractère à afficher (24) dans un repère (29) centré sur le barycentre (G1) déterminé, et
- une deuxième unité de calcul (44) d'un écart (E) entre le caractère à afficher (24) et le caractère de référence (34), en fonction des coordonnées géométriques calculées pour le caractère à afficher (24) et de coordonnées géométriques prédéterminées pour le caractère de référence (34), lesdites coordonnées géométriques prédéterminées étant des coordonnées géométriques des points caractéristiques (38) du caractère de référence (34) dans un repère (39) centré sur un barycentre (G2) de ses points caractéristiques (38),

le caractère à afficher (24) étant considéré correct seulement si l'écart (E) calculé est inférieur à un seuil (S) prédéterminé

dans lequel le caractère à afficher (24) et le caractère de référence (34) comprennent chacun au moins un segment (26, 36) à afficher sur l'écran (20), les points caractéristiques (28, 38) dudit caractère correspondant à des extrémités de l'au moins un segment (26, 36).

9. Processeur graphique (10) comprenant un dispositif électronique (30) de vérification, **caractérisé en ce que** le dispositif de vérification (30) est selon la revendication 8.

**Patentansprüche**

1. Verfahren zur Überprüfung eines auf einem Bildschirm (20) anzuzeigenden Zeichens (24) im Vergleich zu einem Referenzzeichen (34),

   das anzuzeigende Zeichen (24) und das Referenzzeichen (34) jeweils umfassend mindestens mehrere charakteristische Punkte (28, 38), die auf dem Bildschirm (20) angezeigt werden sollen,
   wobei das Verfahren **dadurch gekennzeichnet ist, dass** es danach die folgenden Schritte umfasst:

   a) Bestimmen (210) eines Schwerpunkts (G1) der charakteristischen Punkte (28) des anzuzeigenden Zeichens (24),
   b) Berechnen (220) von geometrischen Koordinaten von jedem charakteristischen Punkt (28) des anzuzeigenden Zeichens (24) in einem Koordinatensystem (29), das auf den bestimmten Schwerpunkt (G1) zentriert ist, und
   c) Berechnen (230) einer Abweichung (E) zwischen dem anzuzeigenden Zeichen (24) und dem Referenzzeichen (34) abhängig von den berechneten geometrischen Koordinaten für das anzuzeigende Zeichen (24) und von vorbestimmten geometrischen Koordinaten für das Referenzzeichen (34), wobei die vorbestimmten geometrischen Koordinaten geometrische Koordinaten der charakteristischen Punkte (38) des Referenzzeichens (34) in einem Koordinatensystem (39) sind, das auf einen Schwerpunkt (G2) seiner charakteristischen Punkte (38) zentriert ist,

   wobei das anzuzeigende Zeichen (24) nur dann als richtig angesehen wird, wenn die berechnete Abweichung (E) kleiner ist als ein vorbestimmter Schwellenwert (S),
   wobei das anzuzeigende Zeichen (24) und das Referenzzeichen (34) jeweils mindestens ein Segment (26, 36) umfassen, das auf dem Bildschirm (20) angezeigt werden soll, wobei die charakteristischen Punkte (28, 38) des Zeichens den Enden des mindestens einen Segments (26, 36) entsprechen.

2. Verfahren nach Anspruch 1, wobei das Verfahren nach Schritt b) ferner die folgenden Schritte umfasst:

   d) Berechnen (240) einer geometrischen Transformation zwischen dem anzuzeigenden Zeichen (24) und dem Referenzzeichen (34) und dem anderen Zeichen aus dem anzuzeigenden Zeichen (24) und dem Referenzzeichen (34),
   e) Bestimmen (250) einer Position des anzuzeigenden Zeichens (24) auf dem Bildschirm (20), basierend auf der berechneten geometrischen Transformation und einer vorbestimmten Position des Referenzzeichens (34), und
   f) Bestimmen (260) einer Bildschirmausrichtung (20) des anzuzeigenden Zeichens (24), basierend auf der berechneten geometrischen Transformation und einer vorbestimmten Ausrichtung des Referenzzeichens (34).

3. Verfahren nach Anspruch 2, wobei das Verfahren nach Schritt d) ferner einen Schritt eines Bestimmen (270) einer Bildschirmgröße (20) des anzuzeigenden Zeichens (24) basierend auf der berechneten geometrischen Transformation und einer vorbestimmten Größe des Referenzzeichens (34) umfasst.

4. Verfahren nach einem der vorherigen Ansprüche, wobei das Verfahren vor Schritt a) einen Schritt eines Vergleichens (200) der Anzahl der charakteristischen Punkte (28) des anzuzeigenden Zeichens (24) und der des Referenzzeichens (34) umfasst, wobei das anzuzeigende Zeichen (24) als falsch betrachtet wird und die folgenden Schritte nicht ausgeführt werden, wenn die Anzahl der charakteristischen Punkte (28) des anzuzeigenden Zeichens (24) von der des Referenzzeichens (34) abweicht.

**5.** Verfahren nach einem der vorherigen Ansprüche, wobei in Schritt c) die Abweichung (E) zwischen dem anzuzeigenden Zeichen (24) und dem Referenzzeichen (34) abhängig von einem quadratischen Fehler zwischen den geometrischen Koordinaten der charakteristischen Punkte (28) des anzuzeigenden Zeichens (24) und jenen der charakteristischen Punkte (38) des Referenzzeichens (34) berechnet wird.

**6.** Verfahren nach Anspruch 5, wobei das anzuzeigende Zeichen (24) das Bild einer geometrischen Transformation des Referenzzeichens (34) ist, wobei die geometrische Transformation eine direkte Ähnlichkeit ist, die Anzahl der charakteristischen Punkte (28) des anzuzeigenden Zeichens (24) und die Anzahl der charakteristischen Punkte (38) des Referenzzeichens (34) gleich sind, und der quadratische Fehler eine der folgenden Gleichungen erfüllt:

- $E_q = \sqrt{\dfrac{S_2 + s_2 - 2\sigma}{N}}$ wenn die geometrische Transformation eine Translation ist,

- $E_q = \sqrt{\dfrac{S_2 + s_2 - 2\rho}{N}}$, wenn die geometrische Transformation eine Drehung oder eine Kombination aus einer Translation und einer Drehung ist und

- $E_q = \sqrt{\dfrac{S_2 - \rho/\lambda}{N}}$ wenn die geometrische Transformation eine Homothetie oder eine Kombination aus einer Homothetie und einer Translation und/oder einer Drehung ist,

wobei $S_2 = \sum_{1 \leq i \leq N}(X_i^2 + Y_i^2)$ ; $s_2 = \sum_{1 \leq i \leq N}(x_i^2 + y_i^2)$ ; $\sigma = \Sigma_{1 \leq i \leq N}(x_i X_i + y_i Y_i)$ $\rho = \sqrt{\sigma^2 + \kappa^2}$ ; $\kappa = \Sigma_{1 \leq i \leq N}(y_i X_i + x_i Y_i)$ und $\lambda = s_2/\rho$,

wobei N die Anzahl der charakteristischen Punkte (28, 38) von jedem Zeichen (24, 34) darstellt, $x_i$ und $y_i$ die geometrischen Koordinaten eines i-ten charakteristischen Punkts von den charakteristischen Punkten (28) des anzuzeigenden Zeichens (24) sind und $X_i$ und $Y_i$ die geometrischen Koordinaten eines i-ten charakteristischen Punkts von den charakteristischen Punkten (38) des Referenzzeichens (34) sind.

**7.** Programmprodukt, umfassend Softwareanweisungen, die, wenn sie von einem Computer ausgeführt werden, ein Verfahren nach einem der vorherigen Ansprüche implementieren.

**8.** Elektronische Überprüfungsvorrichtung (30) eines auf einem Bildschirm (20) anzuzeigenden Zeichens (24) im Vergleich zu einem Referenzzeichen (34),

das anzuzeigende Zeichen (24) und das Referenzzeichen (34) jeweils umfassend mehrere charakteristische Punkte (28, 38), die auf dem Bildschirm (20) angezeigt werden sollen,
wobei die Überprüfungsvorrichtung (30) **dadurch gekennzeichnet ist, dass** sie Folgendes umfasst:

- eine Bestimmungseinheit (40) eines Schwerpunkts (G1) der charakteristischen Punkte (28) des anzuzeigenden Zeichens (24),
- eine erste Berechnungseinheit (42) geometrischer Koordinaten von jedem charakteristischen Punkt (28) des anzuzeigenden Zeichens (24) in einem Koordinatensystem (29), das auf den bestimmten Schwerpunkt (G1) zentriert ist, und
- eine zweite Berechnungseinheit (44) einer Abweichung (E) zwischen dem anzuzeigenden Zeichen (24) und dem Referenzzeichen (34) abhängig von den berechneten geometrischen Koordinaten für das anzuzeigende Zeichen (24) und von vorbestimmten geometrischen Koordinaten für das Referenzzeichen (34), wobei die vorbestimmten geometrischen Koordinaten geometrische Koordinaten der charakteristischen Punkte (38) des Referenzzeichens (34) in einem Koordinatensystem (39) sind, das auf einen Schwerpunkt (G2) seiner charakteristischen Punkte (38) zentriert ist,

wobei das anzuzeigende Zeichen (24) nur dann als richtig angesehen wird, wenn die berechnete Abweichung (E) kleiner ist als ein vorbestimmter Schwellenwert (S),
wobei das anzuzeigende Zeichen (24) und das Referenzzeichen (34) jeweils mindestens ein Segment (26, 36) umfassen, das auf dem Bildschirm (20) angezeigt werden soll, wobei die charakteristischen Punkte (28, 38) des Zeichens den Enden des mindestens einen Segments (26, 36) entsprechen.

**9.** Grafikprozessor (10), umfassend eine elektronische Überprüfungsvorrichtung (30), **dadurch gekennzeichnet, dass** die Prüfvorrichtung (30) gemäß Anspruch 8 ist.

**Claims**

1.  A method for verifying a character to be displayed (24) on a screen (20), compared to a reference character (34),

    the character to be displayed (24) and the reference character (34) each comprising at least several characteristic (28, 38) points to be displayed on the screen (20),
    the method being **characterized in that** it comprises the following steps:

    a) determining (210) a barycenter (G1) of the characteristic points (28) of the character to be displayed (24),
    b) computing (220) geometric coordinates of each characteristic point (28) of the character to be displayed (24) in a coordinate system (29) centered on the determined barycenter (G1), and
    c) computing (230) a deviation (E) between the character to be displayed (24) and the reference character (34), as a function of the computed geometric coordinates for the character to be displayed (24) and predetermined geometric coordinates for the reference character (34), said predetermined geometric coordinates being geometric coordinates of the characteristic points (38) of the reference character (34) in a coordinate system (39) centered on a barycenter (G2) of its characteristic points (38),

    the character to be displayed (24) being considered correct only if the computed deviation (E) is below the predetermined threshold (S),
    the character to be displayed (24) and the reference character (34) each comprising at least one segment (26, 36) to be displayed on the screen (20), the characteristic points (28, 38) of said character corresponding to end of the at least one segment (26, 36).

2.  The method according to claim 1, wherein the method further comprises following steps, after step b):

    d) computing (240) a geometric transformation between one character among the character to be displayed (24) and the reference character (34), and the other character among the character to be displayed (24) and the reference character (34),
    e) determining (250) a position on the screen (20) of the character to be displayed (24), as a function of the computed geometric transformation and a position of the predetermined reference character (34), and
    f) determining (260) an orientation on the screen (20) of the character to be displayed (24), as a function of the computed geometric transformation and an orientation of the predetermined reference character (34).

3.  The method according to claim 2, wherein the method further comprises, after step d), a step for determining (270) a size on the screen (20) of the character to be displayed (24), as a function of the computed geometric transformation and a size of the predetermined reference character (34).

4.  The method according to any one of the preceding claims, wherein the method comprises, before step a), a step for comparing (200) the number of characteristic points (28) of the character to be displayed (24) and that of the reference character (34), the character to be displayed (24) being considered incorrect and the following steps not being carried out, if the number of characteristic points (28) of the character to be displayed (24) differs from that of the reference character (34).

5.  The method according to any one of the preceding claims, wherein, during step c), the deviation (E) between the character to be displayed (24) and the reference character (34) is computed as a function of a root mean square error between the geometric coordinates of the characteristic points (28) of the character to be displayed (24) and those of the characteristic points (38) of the reference character (34).

6.  The method according to claim 5, wherein the character to be displayed (24) is the image of a geometric transformation of the reference character (34), the geometric transformation being a direct similarity, the number of characteristic points (28) of the character to be displayed (24) and the number of characteristic points (38) of the reference character (34) are equal, and the root mean square error verifies one of the following equations:

$$E_q = \sqrt{\frac{S_2 + s_2 - 2\sigma}{N}}$$ if the geometric transformation is a translation,

$$E_q = \sqrt{\frac{S_2 + s_2 - 2\rho}{N}}$$

- if the geometric transformation is a rotation, or a combination of a translation and a rotation, and

$$E_q = \sqrt{\frac{S_2 - \rho/\lambda}{N}}$$

- if the geometric transformation is a change of scale, or a combination of a change of scale, and a translation and/or a rotation,

with $S_2 = \sum_{1 \le i \le N}(X_i^2 + Y_i^2)$ ; $s_2 = \sum_{1 \le i \le N}(x_i^2 + y_i^2)$ ; $\sigma = \sum_{1 \le i \le N}(x_i X_i + y_i Y_i)$ ; $\rho = \sqrt{\sigma^2 + \kappa^2}$ ; $\kappa = \sum_{1 \le i \le N}(y_i X_i + x_i Y_i)$ ; and $\lambda = s_2/\rho$,

N representing the number of characteristic points (28, 38) of each character (24, 34), $x_i$ and $y_i$ being the geometric coordinates of an $i^{th}$ characteristic point among the characteristic points (28) of the characteristic to be displayed (24), and $X_i$ and $Y_i$ being the geometric coordinates of an $i^{th}$ characteristic point among the characteristic points (38) of the reference character (34).

7. A computer program product comprising software instructions which, when executed by a computer, carry out a method according to any one of the preceding claims.

8. An electronic device for verifying (30) a character to be displayed (24) on a screen (20), compared to a reference character (34),

   the character to be displayed (24) and the reference character (34) each comprising several characteristic (28, 38) points to be displayed on the screen (20),
   the verification device (30) being **characterized in that** it comprises:

   - a unit for determining (40) a barycenter (G1) of the characteristic points (28) of the character to be displayed (24),
   - a first unit for computing (42) geometric coordinates of each characteristic point (28) of the character to be displayed (24) in a coordinate system (29) centered on the determined barycenter (G1), and
   - a second unit for computing (44) a deviation (E) between the character to be displayed (24) and the reference character (34), as a function of the computed geometric coordinates for the character to be displayed (24) and predetermined geometric coordinates for the reference character (34), said predetermined geometric coordinates being geometric coordinates of the characteristic points (38) of the reference character (34) in a coordinate system (39) centered on a barycenter (G2) of its characteristic points (38),

   the character to be displayed (24) being considered correct only if the computed deviation (E) is below the predetermined threshold (S),
   wherein the character to be displayed (24) and the reference character (34) each comprise at least one segment (26, 36) to be displayed on the screen (20), the characteristic points (28, 38) of said character corresponding to end of the at least one segment (26, 36).

9. A graphics processor (10) comprising an electronic verification device (30), **characterized in that** the verification device (30) is according to claim 8.

## FIG.1

FIG.2

**FIG.3**

**EP 3 757 880 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002105515 A1
- JP 2016076093 A